# EUROPEAN PATENT SPECIFICATION

(11) **EP 4 377 569 B1**
(45) Date of publication and mention of the grant of the patent: **28.01.2026**
(21) Application number: 22743837.1
(22) Date of filing: 18.07.2022
(51) Int. Cl.: F03D 13/10, B66C 1/10, B66C 23/20, B66C 23/66

(54) **WIND TURBINE BLADE INSTALLATION APPARATUS AND METHOD OF INSTALLING A WIND TURBINE BLADE**
VORRICHTUNG UND VERFAHREN ZUR INSTALLATION EINER WINDTURBINENSCHAUFEL
APPAREIL D'INSTALLATION DE PALE D'ÉOLIENNE ET PROCÉDÉ D'INSTALLATION D'UNE PALE D'ÉOLIENNE

(30) Priority: 27.07.2021 EP 21188078
(43) Date of publication of application: 05.06.2024
(73) Proprietor: Ørsted Wind Power A/S, 7000 Fredericia (DK)
(72) Inventor: DELAMORE, David, 7000 Fredericia (DK)
(74) Representative: Lewis Silkin LLP
(86) International application number: PCT/EP2022/070033
(87) International publication number: WO 2023/006468

(56) References cited:
- WO-A1-2014/125461
- WO-A1-2020/085902
- GB-A- 2 573 796
- US-A1- 2010 158 654

## Description

The present invention concerns a wind turbine blade installation apparatus and a method of installing a wind turbine blade. The invention is particularly relevant to an apparatus used with a crane for vertically attaching wind turbine blades to the hub of the wind turbine's nacelle, and a method of installing wind turbine blades in a vertical orientation. The invention is most particularly relevant to apparatus and methods for offshore installation of wind turbine blades.

Offshore wind has become an increasingly important part of our energy supply infrastructure. Installation costs remain one of the largest cost items associated with establishing new offshore wind farms. In particular, the challenging marine environment makes operations significantly more complex than they would be onshore, and necessitates the use of specialist equipment and vessels. This size, specialisation and complexity means that the vessels in particular are extremely expensive. As such, there are a relatively limited number of suitable vessels available in the world, and these are hired as needed for wind farm installation projects.

As demand for renewable energy supplies increases, so has the incentives to adopt ever larger wind turbine generators. This has led to the need for even larger wind turbines requiring even larger wind turbine blades, with some now being over 100 meters in length. However, these factors have exacerbated the issues associated with the availability of suitable vessels, with a particular challenge being the installation of the wind turbine blades, due to the high crane hook height required and the relatively high weather downtime, arising from the low maximum allowable wind speeds during blade installation, due to the sensitivity of the blades to wind gusts).

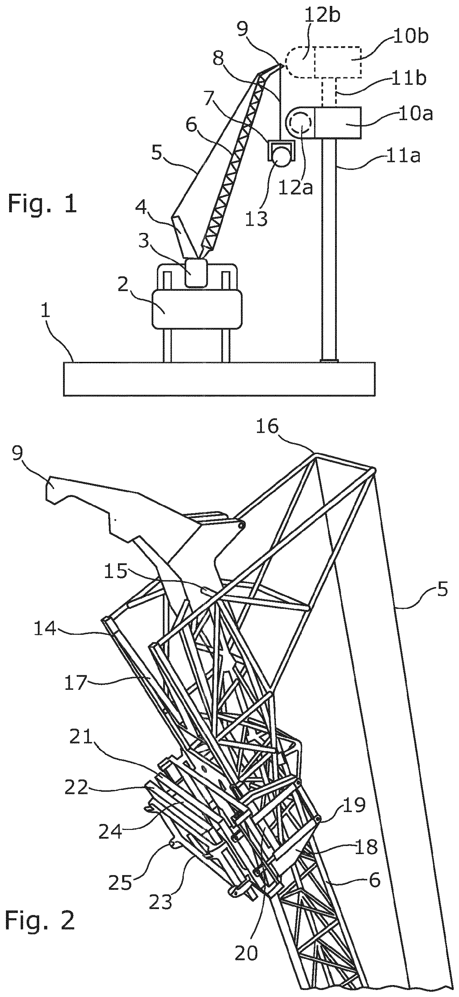

In this connection, Figure 1 shows a schematic illustration of a blade during a conventional installation methodology. As shown, a wind turbine 11a is already partly installed and comprises a nacelle 10a provided on top of a wind turbine tower, itself supported by a foundation, such as a monopile. The nacelle 10a comprises a hub 12a at its front for receiving the wind turbine blades. A jackup vessel 2 will sail to the wind turbine location and lower its legs to elevate its hull above the waterline 1. A crane 4 provided on the jack-up vessel 2 will then be used to lift the wind turbine blade 13 using a blade yoke or lifting tool 7 connected to its crane hook, for example via a quick-connect/release mechanism. In this process, the crane's slewing platform 3 will rotate the crane 4 so that the wire hoist rope 8 can lift the blade 13 from a stored horizontal position on the deck of the jack-up vessel 2 or an adjacent vessel. The hoist rope 8 will then be retracted through a sheave provided at the head 9 of the crane's arm 6, such as its boom or jib, to lift the blade 13. The slewing platform 3 can be rotated to move the hoisted blade 13 toward the hub 12a. The position of the arm 6 can also be adjusted through guy lines 5. Furthermore, taglines between the blade yoke and the crane boom may be used to reduce the movements of the blade during installation and to assist with steering/ positioning it towards the hub. The blade 13 is thereby suspended from the flexible hoist rope 8 in a substantially horizontal orientation, and the position of the crane is adjusted to locate the blade's root into the corresponding blade bearing provided on the hub 12a.

There are however a number of shortcomings with the above conventional installation apparatus and the associated methods. Firstly, when the blade is lifted, due to its size, shape and aerodynamic profile, it is highly susceptible to wind loads and in particular wind gusts. Furthermore, because it is merely suspended by the flexible wire hoist rope 8 it becomes a significant challenge to keep the blade position stable as attempts are made to locate the root into the hub 12a. This problem is exacerbated as blades get larger, because the forces generated by the larger aerofoil surfaces are also greater, which limits the effectiveness of any tag lines which would otherwise be used to restrict blade movement. Consequently, blades 13 can often only be installed in relatively low wind conditions. This adds to the complexity and cost of installation because the jack-up vessel 2 will need to be rented for a sufficiently large period to account for the weather downtime while waiting for the suitable weather windows to arise.

A further issue arising from the adoption of larger wind turbines is that the associated wind turbine towers are also necessarily larger. As such, the blades 13 need to be lifted to ever greater heights. However, the blade installation capabilities of a jackup are therefore normally limited by the maximum height of the head 9 of the crane's arm 6. For example, as shown in Figure 1, a taller wind turbine tower 11b would necessitate an even larger crane 4 and jack-up vessel 2 in order for the head 9 to be located with sufficient clearance above its hub 12b. This clearance is needed, for instance, for the height offset from the head 9 to the crane hook, for the height of the rigging, and the height of the upper blade yoke. This is necessary because, using such conventional installation apparatus, the blade 13 is suspended beneath the head 9. Although even larger jack-up vessels could be used, this only increases their expense and significantly limits the number of suitable vessels available for installation. Indeed, smaller vessels will quickly become redundant if they don't have sufficiently large cranes to install larger, newer blades.

US 2010/158654 A1 discloses a manipulator for the assembly of rotor blades of a wind power installation. WO 2020/085902 A1 discloses a method for six-o'clock installation of a wind turbine blade on a horizontal axis rotational hub that is arranged on top of a tower of a wind turbine.

The present invention therefore seeks to address the above issues.

According to a first aspect of the present invention, there is provided a wind turbine blade installation apparatus for installing a wind turbine blade onto a hub of a wind turbine, the apparatus comprising: a primary frame for supporting the wind turbine blade in a vertical orientation; an interface for connecting the wind turbine blade to the primary frame; and a rigid connector for connecting the primary frame to an arm of a crane, wherein the rigid connector forms a moveable coupling to the arm such that the primary frame is moveable between a first position for receiving the blade lifted by the crane, and a second position for holding a root of the blade in its vertical orientation above a head of the arm of the crane, characterised in that the rigid connector forms a pivotable coupling with the crane arm, and wherein the primary frame comprises a line connector for connecting the primary frame to a winch line, wherein retraction of the winch line pivots the primary frame about the pivotable coupling from the first position to the second position.

In this way, an apparatus is provided which can be installed onto a crane arm to allow the crane to form a rigid support for a wind turbine blade in a vertical, rather than horizontal orientation. By supporting the blade in a vertical orientation, the root of the blade can be held above the arm of the crane, thereby allowing a shorter crane to install a blade onto a larger wind turbine. That is, the head of the crane's boom or jib doesn't need to be above the blade hub and instead can be distanced beneath it, thereby allowing a wider range of vessels to be used for the installation process. At the same time, the vertical orientation of the blade mitigates the forces that would otherwise be generated by the wind. This is because a greater proportion of the blade may be held lower, and wind speed tends to increase with height, due to wind shear. Furthermore, the provision of the rigid connector allows the supported blade to be directly braced by the crane's boom or jib, thereby providing easier handling and greater motional stability and control. That is, rather than be suspended by a flexible hoist rope and be controlled with tag lines, which can only restrain downward movement and partly restrain horizontal movements and yaw rotation, the blade is instead held in position by a stiff structural connection which may restrain downward, upward, lateral, and tilting movements by transferring forces through the rigid connector to the crane arm. This may thereby provide greater stability in the wind. Advantageously, the apparatus may also be retrofitted to existing crane arms. In embodiments, the apparatus may comprise the crane to form an integrated installation apparatus.

This also allows the primary frame to be moved between its first and second positions through a pivoting action. As such, the movement of the blade can be controlled and restricted with a simple coupling, with the blade being braced laterally through the rigid connector throughout the motion. Furthermore, the pivoting movement may be easily controlled through a lever action.

The pivoting movement may also be easily controlled using a winch actuator in coordination with the control of the crane.

In embodiments, the wind turbine blade installation apparatus further comprises a rotatable coupling provided between the interface and the primary frame, wherein the interface is rotatable via the rotatable coupling between a first position where the blade is supported in a horizontal orientation and a second position where the blade is in its vertical orientation. The apparatus may thereby receive the blade in the horizontal orientation in which it was been transported to the installation site, and then be operable to transition the wind turbine blade into a vertical orientation for connection into the wind turbine hub. Accordingly, conventional logistics and hoisting methodologies may still be used to transport blades to the installation site, with the apparatus able to rotate the blade into the desired vertical orientation, with its longitudinal axis perpendicular to the sea. In embodiments, the apparatus may include an actuator for actuating rotation of the rotatable coupling.

In embodiments, the wind turbine blade installation apparatus further comprises a slewing frame attached to the rotatable coupling for rotation relative to the primary frame. In this way, the slewing frame may support the wind turbine blade and resist torsional forces applied through the rotatable coupling as the blade is rotated.

In embodiments, the interface further comprises a locking mechanism operable to releasably fix the blade to the interface. In this way, the blade may be controllably attached and detached from the apparatus during installation. For example, the blade may be first lifted by the crane's hoisting rope, and then locked onto the apparatus by the locking mechanism once it is in an elevated position, before the connection phase of installation is initiated. Once connected into the hub, the blade may then be decoupled from the apparatus by releasing the locking mechanism.

In embodiments, the wind turbine blade installation apparatus further comprises a carrier for clamping to the blade, wherein the carrier comprises an interface connector for connecting the blade to the interface. In this way, the blade may be supported during installation by a carrier, such as a yoke or lifting tool, thereby facilitating easier handling and standardising the couplings needed for connection to the primary frame.

In embodiments, the carrier further comprises a hoist connector for attachment to a hoist rope of the crane for lifting the blade. In this way, the blade may be easily lifted from a storage position on the deck of a vessel up to an elevated position adjacent to the distal end of the crane's arm using the crane's hoist. As such, a conventional crane hoisting system may be used to lift the blade, with the apparatus providing improved handling during the connection phase of installation.

In embodiments, the wind turbine blade installation apparatus further comprises a carriage provided between the interface and the primary frame, wherein the carriage is slidably moveable for moving the interface between a first position for receiving the blade lifted by the crane, and a second position for elevating the root of the blade. In this way, the carriage may provide vertical articulation for moving the blade up and down, independently of the crane's hoist mechanism. As such, the apparatus may be located closer to the head of the crane's arm and the carriage can be positioned for connecting the blade hoisted to the maximum elevation by the hoist mechanism, before it is further elevated by the carriage for insertion into the hub. The movement of the carriage may also be used for more precise movement control during installation, as well as potentially motion compensation. For example, during installation, the crane and wind turbine may have a certain vibration movement, due primarily to wave loading on the jackup legs and the wind turbine foundation, as well as wind loading on the two structures. Controlled movement of the carriage may thereby be used to help compensate for this.

In embodiments, the wind turbine blade installation apparatus further comprises a tilting mechanism provided between the interface and the primary frame, wherein the tilting mechanism comprises one or more actuators for tilting the interface relative to the primary frame. In this way, the blade may be tilted relative to the primary frame for providing more precise movement control during installation. The tilting action may also be used for motion control and/ or motion compensation.

In embodiments, the wind turbine blade installation apparatus further comprise a motion compensation mechanism provided between the interface and the primary frame, wherein the motion compensation mechanism comprises one or more actuators for moving the interface relative to the primary frame. Relative movements between crane and the wind turbine hub may thereby be compensated for by the motion compensation actuators.

According to a second aspect, there is provided a method of installing a wind turbine blade onto a hub of a wind turbine, the method comprising: lifting the wind turbine blade using a crane; connecting the blade to a primary frame via an interface, wherein the primary frame is connected to the arm of the crane via a rigid connector forming a moveable coupling; moving the primary frame from a first position to a second position via the moveable coupling for holding a root of the blade in a vertical orientation above a head of the arm of the crane, characterised in that the rigid connector forms a pivotable coupling with the crane arm and wherein the primary frame comprises a line connector for connecting the primary frame to a winch line, and retraction of the winch line pivots the primary frame about the pivotable coupling from the first position to the second position.

In this way, an improved method of connecting a blade into a wind turbine blade hub may be provided in which the blade is installed vertically from beneath the hub. As such, the blade may be handled more easily, and blades may be installed into taller wind turbines than would otherwise be possible with conventional installation methods.

In embodiments, the method further comprises the step of operating a rotatable coupling provided between the interface and the primary frame once the blade is connected, wherein operation of the rotatable coupling rotates the blade from a first position where the blade is supported in a horizontal orientation to a second position where the blade is in its vertical orientation. As such, the blade can be transported to the installation site using conventional logistics and hoisting methodologies, and then transitioned to a vertical orientation immediately prior to connection into the wind turbine hub.

In embodiments, the step of lifting the wind turbine blade using a crane comprises: connecting a carrier to the blade; connecting a crane hook to the carrier and lifting the carrier to an elevated position for connecting the blade to the primary frame. As such, the blade may be supported during installation by a carrier, such as a blade yoke or lifting tool, thereby facilitating easier handling and standardising the couplings needed for connection to the primary frame.

In embodiments, the step of connecting the blade to the primary frame comprises: releasably fixing the carrier to the interface using a locking mechanism provided on the interface when the carrier is in the elevated position; and detaching the crane hook from the carrier. In this way, the blade may be controllably attached and detached from the apparatus during installation, allowing the blade to be first lifted by the crane's wire hoist rope, and then locked onto the apparatus for connection to the hub.

Illustrative embodiments of the present invention will now be described with reference to the accompanying drawings in which:
Figure 1 shows a schematic illustration of a blade during a conventional installation method;
Figure 2 shows a front perspective view of an apparatus according to an illustrative embodiment when connected to the distal end of a crane arm;
Figure 3 shows the apparatus of figure 2 attached to a crane during a lifting phase of blade installation.
Figure 4 shows a rear perspective view of the apparatus of figure 2 during a docking phase of blade installation;
Figure 5 shows a rear perspective view of the apparatus of figure 2 during a frame pivoting phase of blade installation;
Figure 6 shows a front perspective view of the apparatus of figure 2 during a blade rotation phase of blade installation;
Figure 7 shows a rear perspective view of the apparatus of figure 2 during a blade insertion phase of blade installation; and
Figure 8 shows a rear perspective view of the apparatus of figure 2, with the crane and wind turbine during a blade connection phase of blade installation

An illustrative embodiment of the wind turbine blade installation apparatus will now be described with reference to Figures 2 to 8.

With reference to figure 2, the apparatus comprises a main or primary frame 14 which is attached to the distal end of the boom 6 of a crane, beneath the boom's head 9 which houses the sheaves about which the crane's main wire hoist rope (not shown) is supported. As such, in embodiments, the primary frame 14 may be built into the crane's boom 6 or be provided as a retrofitted component to an existing crane. It will also be understood that whilst the term "rope" has been used, this is a general term in the art and the crane's hoist line may be formed in various configurations, such as a cable or chain.

The primary frame 14 is attached to the boom 6 through pivot axle 15 which extends through a strong point near the boom head 9 and forms a rotatable coupling to the boom 6. As such, the primary frame 14 is able to pivot relative to the boom 6, but lateral movement is restrained by the rigid pivot axle 15. The rear of the primary frame comprises a lever section terminating in lever attachment points 16, which are used to connect the primary frame to winch lines 5. The winch lines 5 are connected to a winch provided at the base of the crane and can thereby be retracted for pivoting the primary frame 14 from a first position where the frame 14 is retracted against the boom 6 such that the path of the crane's hook and hoisting rope is unobstructed, to a second position, where the front of the frame 14 is pivoted out to extend forward of the boom 6. It will be understood that in other embodiments, a second set of winch lines and attachment points may be provided for moving the frame from the second position back to the first, thereby forming an antagonistic pair with the first winch lines 5 and lever attachment points 16.

The front of frame 14 is provided with sliding rails 17 which form a track for the slidable coupling 20 provided on carriage 18. As such, the carriage 18 is able to slide up and down the sliding rails 17 under the control of an actuator. The actuator may, for example, be a hydraulic, pneumatic, or an electric actuator and has been omitted for the simplicity of the drawings. The carriage 18 is connected to a tiltable frame 21 via four hydraulic actuators 19. As such, the tiltable frame 21 may be tilted outwardly from the carriage 18 by varying the relative extensions of the actuators 19.

A rotatable coupling 24 connects the tiltable frame 21 to a slewing frame 22. As such, the slewing frame 22 is rotatable relative to the tiltable frame 21 under the control of a rotatable actuator. The actuator may, for example, be a hydraulic or geared actuator and has been omitted for the simplicity of the drawing.

The slewing frame 22 is connected to an interface 23 which comprises a plurality of lockable clamps 25 on its front face which are operable to clamp to a blade yoke supporting a wind turbine blade. As such, a wind turbine blade connected to a yoke can be releasably docked with to the primary frame 14 via the interface 23, the slewing frame 22, the tilting frame 21 and the carriage 18. A controller, for example in the crane or a remote unit, may be provided to control the actuation of the lockable clamp, the actuators and the winch lines 5.

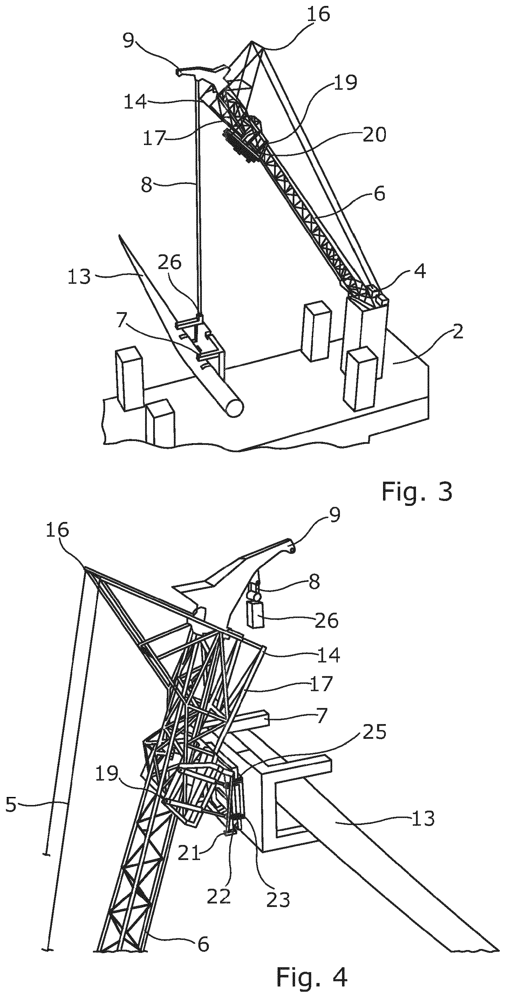

An installation process will now be described with reference to figures 3 to 8. Figure 3 shows the apparatus of figure 2 attached to a crane 4 during a lifting phase of blade installation. As shown, the blade 13 is stored horizontally on the deck of a vessel 2. The wire hoist rope 8 of the crane is connected to a blade yoke 7 and this is then fitted around a blade 13 and forms a carrier for supporting the blade 13 during installation. Next, the hoist rope 8 can be retracted to lift the blade 13 to an elevated position adjacent to the top of the boom 6 in a conventional manner (i.e. in combination with slewing of the crane and raising of the crane boom). During this process, the primary frame 14 is held in its first retracted position so that it doesn't obstruct the hoist rope 8 or the blade 13 as it approaches the head 9. Once elevated, the crane 4 may be rotated to position the blade 13 over the side of the vessel 2, adjacent to the wind turbine.

Once the blade 13 is in an elevated position near the top of the achievable hoisting height, it is positioned via the hoist rope 8 and tag lines (not shown) adjacent to the interface 23. As shown in figure 4, once in this position, the tilting frame 21 can be extended using actuators 19 such that the interface 23 is aligned with an opposing connector provided on the yoke 7. The locking clamps 25 may then be actuated to clamp the yoke 7, and hence the blade 13, to the interface 23. At this stage, the weight of the blade 13 is now supported through the interface 23 to the primary frame 14, and hence the crane boom 6. As such, the hook block 26 can then be detached from the yoke 7 and retracted further towards the head 9 to keep it out of the way.

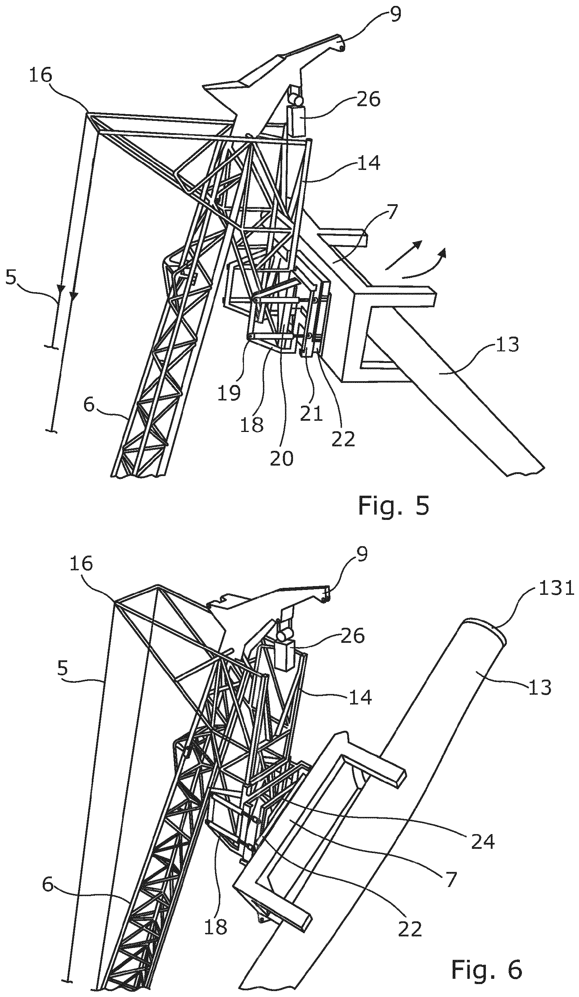

Once the blade 13 has been secured to the interface 23, the primary frame can then be pivoted outward by retracting winch lines 5. This acts to move the front of the primary frame 14 forward, and hence moves the blade 13 in front of the head 9, as shown in figure 5. During this process, the rotatable coupling 24 may also be actuated to rotate the blade 13 from its horizontal orientation to a vertical one. This rotation process is shown in Figure 6. It will be understood that rotation is possible at this stage because the blade 13 is elevated and located sufficiently forward that it clears the boom head 9.

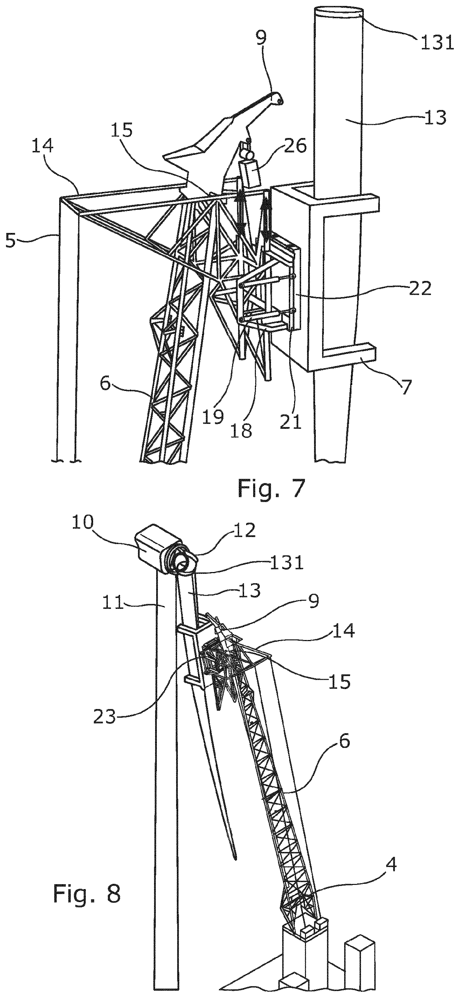

Figure 7 shows the blade 13 once it has been fully rotated into a vertical orientation. As shown the slewing frame 22 has rotated 90 degrees relative to the tilting frame 21 to effect the orientational transition. Once in this position, the root 131 of the blade 13 is held above the head 9 of the boom 6. The carriage 18 can be actuated to elevate the blade 13 higher up the sliding rails 17 to further increase the height of the root 131. This is used for inserting the blade into the blade hub on the wind turbine, as described in further detail below.

As shown in Figure 8, the blade 13 is connected to the hub 12 of the wind turbine nacelle 10 by aligning the blade root 131 with the corresponding blade bearing on the hub 12. Once aligned, the carriage 18 is actuated to elevate the blade 13 even higher up for inserting the root into the hub 12. During this process, the actuators 19 controlling the tilting frame 21 may provide precise positional adjustments to maintain alignment. It will also be understood that further mechanisms may be used to facilitate the connection of the root 131 and hub 12.

In this way, an improved apparatus and method for installing wind turbine blades may be provided. As the blade is installed in a vertical orientation, the root of the blade can be held above the boom tip or head of the crane, thereby allowing a shorter crane to install a blade onto a larger wind turbine. At the same time, the vertical orientation of the blade may help mitigate the forces that would otherwise be generated by the wind. At the same time, because of the rigid connector to the crane's boom, the blade is directly braced by the crane, thereby providing easier handling and greater stability in higher wind conditions. As such, a more robust system, which may be implemented using a greater number of vessels is provided.

In this connection, for example, whilst installation of the tower and nacelle may require a larger jackup vessel or a floating heavy lift vessel (HLV), embodiments of the invention may allow a smaller jackup to be used to install the blades. As such, the tower/nacelle and blade installation campaigns may be split. This would have the potential to allow the earlier commissioning of the turbine prior to installing the blades since the commissioning crew would be able to access the tower and nacelle, prior to the blade jackup arriving.

It will be understood that the embodiment illustrated above show applications of the invention only for the purposes of illustration. In practice the invention may be applied to many different configurations, the detailed embodiments being straightforward for those skilled in the art to implement.

In this connection, for example, it will be understood that although in the above embodiment, the interface is connected to the primary frame through the slewing frame, the tilting frame, and the carriage, other connection arrangements are possible. For instance, in more simplified embodiments, fewer articulations may be provided. Conversely, more complex embodiments may include additional frames for further movement control. For instance, a motion control frame may be provided for small positional adjustments based on movement tracking. Equally, in embodiments, the apparatus may be provided as an articulated robotic crane arm, either retrofitted to an existing crane or else free-standing. In embodiments, the interface itself may directly clamp onto the wind turbine blade, rather than via a separate yoke.

Finally, it will also be understood that, whilst the illustrative embodiment has been described in conjunction with a jackup vessel, embodiments for use with non-jackup vessels are also envisaged. For example, a floating heavy lift vessel could be used, with the motions created from the roll, pitch, and heave of the vessel being compensated through motion compensation actuators within the apparatus.

## Claims

1. A wind turbine blade installation apparatus for installing a wind turbine blade (13) onto a hub (12) of a wind turbine (11), the apparatus comprising:
a primary frame (14) for supporting the wind turbine blade in a vertical orientation;
an interface (23) for connecting the wind turbine blade to the primary frame; and
a rigid connector (15) for connecting the primary frame to an arm (6) of a crane(4), wherein the rigid connector forms a moveable coupling to the arm such that the primary frame is moveable between a first position for receiving the blade lifted by the crane, and a second position for holding a root (131) of the blade in its vertical orientation above a head (9) of the arm of the crane,
and wherein the rigid connector forms a pivotable coupling with the crane arm, **characterized in that** the primary frame comprises a line connector (16) for connecting the primary frame to a winch line (5), wherein retraction of the winch line pivots the primary frame about the pivotable coupling from the first position to the second position.

2. A wind turbine blade installation apparatus according to claim 1, further comprising a rotatable coupling provided between the interface and the primary frame, wherein the interface is rotatable via the rotatable coupling between a first position where the blade is supported in a horizontal orientation and a second position where the blade is in its vertical orientation.

3. A wind turbine blade installation apparatus according to claim 2, further comprising a slewing frame (22) attached to the rotatable coupling for rotation relative to the primary frame.

4. A wind turbine blade installation apparatus according to any preceding claim, wherein the interface further comprises a locking mechanism (25) operable to releasably fix the blade to the interface.

5. A wind turbine blade installation apparatus according to any preceding claim, further comprising a carrier (7) for clamping to the blade, wherein the carrier comprises an interface connector for connecting the blade to the interface.

6. A wind turbine blade installation apparatus according to claim 5, wherein the carrier further comprises a hoist connector for attachment to a hoist rope of the crane for lifting the blade.

7. A wind turbine blade installation apparatus according to any preceding claim, further comprising a carriage (18) provided between the interface and the primary frame, wherein the carriage is slidably moveable for moving the interface between a first position for receiving the blade lifted by the crane, and a second position for elevating the root of the blade.

8. A wind turbine blade installation apparatus according to any preceding claim, further comprising a tilting mechanism (21) provided between the interface and the primary frame, wherein the tilting mechanism comprises one or more actuators (19) for tilting the interface relative to the primary frame.

9. A wind turbine blade installation apparatus according to any preceding claim, further comprising a motion compensation mechanism provided between the interface and the primary frame, wherein the motion compensation mechanism comprises one or more actuators for moving the interface relative to the primary frame.

10. A method of installing a wind turbine blade (13) onto a hub (12) of a wind turbine (11), the method comprising:
lifting the wind turbine blade using a crane (4);
connecting the blade to a primary frame (14) via an interface (23), wherein the primary frame is connected to the arm (6) of the crane via a rigid connector (15) forming a moveable coupling;
moving the primary frame from a first position to a second position via the moveable coupling for holding a root (131) of the blade in a vertical orientation above a head (9) of the arm of the crane,
and wherein the rigid connector forms a pivotable coupling with the crane arm, **characterized in that** the primary frame comprises a line connector (16) for connecting the primary frame to a winch line (5), and retraction of the winch line pivots the primary frame about the pivotable coupling from the first position to the second position.

11. A method according to claim 10, further comprising the step of operating a rotatable coupling provided between the interface and the primary frame once the blade is connected, wherein operation of the rotatable coupling rotates the blade from a first position where the blade is supported in a horizontal orientation to a second position where the blade is in its vertical orientation.

12. A method according to claim 10 or 11, wherein the step of lifting the wind turbine blade using a crane comprises:
connecting a crane hook (26) to a carrier (7);
connecting the carrier to the blade;
lifting the carrier to an elevated position for connecting the blade to the primary frame.

13. A method according to claims 12, wherein the step of connecting the blade to the primary frame comprises:
releasably fixing the carrier to the interface using a locking mechanism (25) provided on the interface when the carrier is in the elevated position; and
detaching the crane hook from the carrier.

## Patentansprüche

1. Installationsvorrichtung für ein Windturbinenrotorblatt für das Installieren eines Windturbinenrotorblattes (13) an einer Nabe (12) einer Windturbine (11), die Vorrichtung umfassend:
einen Hauptrahmen (14) zum Halten des Windturbinenrotorblattes in einer vertikalen Ausrichtung;
eine Schnittstelle (23) für das Verbinden des Windturbinenrotorblattes mit dem Hauptrahmen; und
ein starres Verbindungselement (15) zum Verbinden des Hauptrahmens mit einem Arm (6) eines Krans (4),
wobei das starre Verbindungselement eine bewegliche Kupplung zu dem Arm bildet, so dass der Hauptrahmen zwischen einer ersten Position zum Aufnehmen des von dem Kran angehobenen Rotorblattes und einer zweiten Position zum Halten einer Wurzel (131) des Rotorblattes in ihrer vertikalen Ausrichtung über einem Kopfteil (9) des Kranarms beweglich ist,
und wobei das starre Verbindungselement eine drehbare Kupplung mit dem Kranarm bildet,
**dadurch gekennzeichnet, dass** der Hauptrahmen ein Seilverbindungselement (16) für das Verbinden des Hauptrahmens mit einem Windenseil (5) umfasst, wobei das Einziehen des Windenseils den Hauptrahmen um die drehbare Kupplung aus der ersten Position in die zweite Position schwenkt.

2. Installationsvorrichtung für ein Windturbinenrotorblatt nach Anspruch 1, ferner umfassend eine drehbare Kupplung, die zwischen der Schnittstelle und dem Hauptrahmen bereitgestellt ist, wobei die Schnittstelle über die drehbare Kupplung zwischen einer ersten Position, in der das Rotorblatt in einer horizontalen Ausrichtung gehalten wird, und einer zweiten Position, in der das Rotorblatt in seiner vertikalen Ausrichtung gehalten wird, drehbar ist.

3. Installationsvorrichtung für ein Windturbinenrotorblatt nach Anspruch 2, ferner umfassend einen Schwenkrahmen (22), der an der drehbaren Kupplung für eine Drehung relativ zum Hauptrahmen angebracht ist.

4. Installationsvorrichtung für ein Windturbinenrotorblatt nach einem der vorstehenden Ansprüche, wobei die Schnittstelle ferner einen Verriegelungsmechanismus (25) umfasst, der funktionsfähig ist, um das Rotorblatt abnehmbar an der Schnittstelle zu befestigen.

5. Installationsvorrichtung für ein Windturbinenrotorblatt nach einem der vorstehenden Ansprüche, ferner umfassend eine Träger (7) für das Einspannen des Rotorblattes, wobei der Träger ein Schnittstellenverbindungselement umfasst, um das Rotorblatt mit der Schnittstelle zu verbinden.

6. Installationsvorrichtung für ein Windturbinenrotorblatt nach Anspruch 5, wobei der Träger ferner ein Hebeverbindungselement für das Befestigen an einem Hebeseil des Krans zum Anheben des Rotorblattes umfasst.

7. Installationsvorrichtung für ein Windturbinenrotorblatt nach einem der vorstehenden Ansprüche, ferner umfassend einen Schlitten (18), der zwischen der Schnittstelle und dem ersten Rahmen bereitgestellt ist, wobei der Schlitten verschiebbar für das Bewegen der Schnittstelle zwischen einer ersten Position zum Aufnehmen des von dem Kran angehobenen Rotorblattes und einer zweiten Position zum Anheben der Wurzel des Rotorblattes beweglich ist.

8. Installationsvorrichtung für ein Windturbinenrotorblatt nach einem der vorstehenden Ansprüche, ferner umfassend eine Kippvorrichtung (21), die zwischen der Schnittstelle und dem Hauptrahmen bereitgestellt ist,
wobei die Kippvorrichtung einen oder mehrere Aktuatoren (19) umfasst, um die Schnittstelle relativ zum Hauptrahmen zu kippen.

9. Installationsvorrichtung für ein Windturbinenrotorblatt nach einem der vorstehenden Ansprüche, ferner umfassend einen Bewegungskompensationsmechanismus, der zwischen der Schnittstelle und dem Hauptrahmen bereitgestellt ist, wobei der Bewegungskompensationsmechanismus einen oder mehrere Aktuatoren umfasst, um die Schnittstelle relativ zum Hauptrahmen zu bewegen.

10. Verfahren zum Installieren eines Windturbinenrotorblattes (13) an einer Nabe (12) einer Windturbine (11), das Verfahren umfassend:
Anheben des Windturbinenrotorblattes mit einem Kran (4);
Verbinden des Rotorblattes mit einem Hauptrahmen (14) über eine Schnittstelle (23), wobei der Hauptrahmen mit dem Arm (6) des Krans über ein starres Verbindungselement (15) verbunden ist, um eine bewegliche Kupplung zu bilden;
Bewegen des Hauptrahmens aus einer ersten Position in eine zweite Position über die bewegliche Kupplung, um eine Wurzel (131) des Rotorblattes in einer vertikalen Ausrichtung über einem Kopfteil (9) des Kranarms zu halten,
und wobei das starre Verbindungselement eine drehbare Kupplung mit dem Kranarm bildet, **dadurch gekennzeichnet, dass** der Hauptrahmen ein Seilverbindungselement (16) für das Verbinden des Hauptrahmen mit einem Windenseil (5) umfasst, und das Einziehen des Windenseils den Hauptrahmen um die drehbare Kupplung aus der ersten Position in die zweite Position schwenkt.

11. Verfahren nach Anspruch 10, ferner umfassend den Schritt des Betreibens einer drehbaren Kupplung, die zwischen der Schnittstelle und dem Hauptrahmen bereitgestellt ist, sobald das Rotorblatt verbunden ist, wobei das Betreiben der drehbaren Kupplung das Rotorblatt aus einer ersten Position, in der das Rotorblatt in einer horizontalen Ausrichtung gehalten wird, in eine zweite Position, in der das Rotorblatt in seiner vertikalen Ausrichtung gehalten wird, dreht.

12. Verfahren nach Anspruch 10 oder 11, wobei der Schritt des Anhebens des Windturbinenrotorblattes mit einem Kran umfasst:
Verbinden eines Kranhakens (26) mit einem Träger (7);
Verbinden des Trägers mit dem Rotorblatt;
Anheben des Trägers in eine erhöhte Position, um das Rotorblatt mit dem Hauptrahmen zu verbinden.

13. Verfahren nach Anspruch 12, wobei der Schritt des Verbinden des Rotorblattes mit dem Hauptrahmen umfasst:
Abnehmbares Befestigen des Trägers an der Schnittstelle unter Verwendung eines Verriegelungsmechanismus (25), der an der Schnittstelle bereitgestellt ist, wenn sich der Träger in der erhöhten Position befindet; und
Lösen des Kranhakens von dem Träger.

## Revendications

1. Appareil d'installation de pale d'éolienne destiné à installer une pale d'éolienne (13) sur un moyeu (12) d'une éolienne (11), l'appareil comprenant :
une structure principale (14) destinée à supporter la pale d'éolienne dans une orientation verticale ;
une interface (23) destinée à relier la pale d'éolienne à la structure principale ; et
une liaison rigide (15) destinée à relier la structure principale à un bras (6) d'une grue (4),
dans lequel la liaison rigide forme un accouplement mobile avec le bras de sorte que la structure principale est mobile entre une première position destinée à recevoir la pale soulevée par la grue, et une seconde position destinée à maintenir une base (131) de la pale dans son orientation verticale au-dessus d'une tête (9) du bras de la grue,
et dans lequel la liaison rigide forme un accouplement pivotant avec le bras de grue,
**caractérisé en ce que** la structure principale comprend une liaison de ligne (16) destinée à relier la structure principale à une ligne de treuil (5), dans lequel la rétraction de la ligne de treuil fait pivoter la structure principale autour de l'accouplement pivotant de la première position à la seconde position.

2. Appareil d'installation de pale d'éolienne selon la revendication 1, comprenant en outre un accouplement rotatif prévu entre l'interface et la structure principale, dans lequel l'interface peut tourner par l'intermédiaire de l'accouplement rotatif entre une première position où la pale est supportée dans une orientation horizontale et une seconde position où la pale est dans son orientation verticale.

3. Appareil d'installation de pale d'éolienne selon la revendication 2, comprenant en outre une structure orientable (22) fixée à l'accouplement rotatif servant à la rotation par rapport à la structure principale.

4. Appareil d'installation de pale d'éolienne selon une quelconque revendication précédente, dans lequel l'interface comprend en outre un mécanisme de verrouillage (25) permettant de fixer de manière libérable la pale à l'interface.

5. Appareil d'installation de pale d'éolienne selon une quelconque revendication précédente, comprenant en outre un transporteur (7) destiné à serrer la pale, dans lequel le transporteur comprend une liaison d'interface destinée à relier la pale à l'interface.

6. Appareil d'installation de pale d'éolienne selon la revendication 5, dans lequel le transporteur comprend en outre une liaison de palan destinée à être fixé à une corde de palan de la grue destiné à soulever la pale.

7. Appareil d'installation de pale d'éolienne selon une quelconque revendication précédente, comprenant en outre un chariot (18) prévu entre l'interface et la structure principale, dans lequel le chariot est mobile de manière coulissante pour déplacer l'interface entre une première position destinée à recevoir la pale soulevée par la grue, et une seconde position destinée à élever la base de la pale.

8. Appareil d'installation de pale d'éolienne selon une quelconque revendication précédente, comprenant en outre un mécanisme d'inclinaison (21) prévu entre l'interface et la structure principale,
dans lequel le mécanisme d'inclinaison comprend un ou plusieurs actionneurs (19) servant à incliner l'interface par rapport à la structure principale.

9. Appareil d'installation de pale d'éolienne selon une quelconque revendication précédente, comprenant en outre un mécanisme de compensation de mouvement prévu entre l'interface et la structure principale, dans lequel le mécanisme de compensation de mouvement comprend un ou plusieurs actionneurs destinés à déplacer l'interface par rapport à la structure principale.

10. Procédé d'installation d'une pale d'éolienne (13) sur un moyeu (12) d'une éolienne (11), le procédé comprenant :
le soulèvement de la pale d'éolienne à l'aide d'une grue (4) ;
la liaison de la pale à une structure principale (14) par l'intermédiaire d'une interface (23), dans lequel la structure principale est reliée au bras (6) de la grue par une liaison rigide (15) formant un accouplement mobile ;
le déplacement de la structure principale d'une première position à une seconde position par l'intermédiaire de l'accouplement mobile destiné à maintenir une base (131) de la pale dans une orientation verticale au-dessus d'une tête (9) du bras de la grue,
et dans lequel la liaison rigide forme un accouplement pivotant avec le bras de grue, **caractérisé en ce que** la structure principale comprend une liaison de ligne (16) destinée à relier la structure principale à une ligne de treuil (5), dans et la rétraction de la ligne de treuil fait pivoter la structure principale autour de l'accouplement pivotant de la première position à la seconde position.

11. Procédé selon la revendication 10, comprenant en outre l'étape d'actionnement d'un accouplement rotatif prévu entre l'interface et la structure principale, une fois que la pale est reliée, dans lequel l'actionnement de l'accouplement rotatif met en rotation la pale d'une première position où la pale est supportée dans une orientation horizontale à une seconde position où la pale est dans son orientation verticale.

12. Procédé selon la revendication 10 ou 11, dans lequel l'étape de soulèvement de la pale d'éolienne à l'aide d'une grue comprend :
la liaison d'un crochet de grue (26) à un transporteur (7) ;
la liaison du transporteur à la lame ;
le soulèvement du transporteur à une position élevée destinée à relier la pale à la structure principale.

13. Procédé selon la revendication 12, dans lequel l'étape de liaison de la lame à la structure principale comprend :
la fixation de manière amovible au transporteur à l'interface à l'aide d'un mécanisme de verrouillage (25) disposé sur l'interface lorsque le transporteur est en position élevée ; et
le détachement du crochet de grue du transporteur.
